# EUROPEAN PATENT SPECIFICATION

(11) **EP 0 555 984 B1**
(45) Date of publication and mention of the grant of the patent: **23.10.1996**
(21) Application number: 93300783.3
(22) Date of filing: 03.02.1993
(51) Int. Cl.: E03F 1/00, E03D 5/00, B61D 35/00

(54) **Malodour-prevention in mobile vacuum toilet systems**
Geruchbeseitigung für mobiles Vakuumtoilettensystem
Traitement des mauvaises odeurs pour système de toilettes à vide mobile

(30) Priority: 05.02.1992 SE 9200324
(43) Date of publication of application: 18.08.1993
(73) Proprietor: EVAC AB, S-12017 Stockholm (SE)
(72) Inventor: Serre, Gérard, F-95200 Sarcelles (FR)
(74) Representative: Newby, John Ross

(56) References cited:
- GB-A- 2 243 166
- US-A- 1 749 356
- US-A- 2 612 186
- US-A- 4 184 506

## Description

The invention relates to a vacuum toilet system intended for installation on a railroad train or other transport vehicle.

Vacuum toilet systems have been in use for many years. Because a vacuum toilet system requires considerably less rinse water than a conventional gravity toilet system and employs small gauge piping and fittings, vacuum toilet systems have proved particularly useful in vehicles for passenger transportation such as aircraft, ships and trains.

Conventionally, a vacuum toilet system comprises at least one toilet bowl connected via a sewer valve to a sewer pipe, the interior of which can be placed under a substantially lower pressure than exists inside the toilet bowl. Each sewer pipe feeds into a sewage collecting tank, from which the sewage is emptied after a certain period of use of the system. To assist the emptying of the toilet bowl following each occasion of use and to improve the cleanliness and hygiene, the toilet bowl is flushed with rinse water that is fed into the toilet bowl in connection with the discharge of the waste contents of the bowl into the sewage collecting tank via the sewer pipe.

In order to achieve a satisfactory evacuation of waste from the toilet bowl and to ensure an effective transport of waste material through the sewer pipe to the sewage collecting tank, a specific level of partial vacuum is required in the sewer pipe. This vacuum level is usually at least about 40 kPa below the ambient pressure. Normally, small vacuum toilet systems including only a few toilet bowls are used in transport vehicles. Systems of that kind are described, for instance in US-A-4,297,751 and GB-A-2,243,166. The volume that must be put under partial vacuum in that kind of system is small enough that the required partial vacuum is conveniently generated and maintained intermittently, which means that the required partial vacuum is generated only in connection with each waste disposal and flushing cycle. Nevertheless, in order to generate the required partial vacuum the volume of the air that must be drawn from the sewage disposal system during a disposal and flushing cycle is quite large, and the air must be drawn rapidly from the sewage disposal system in order for the disposal and flushing cycle to be completed within an acceptable time.

A problem with vacuum toilet systems in transport vehicles is that the air that is expelled from the sewage disposal system has a malodour and this malodour can be bothersome for people standing close to the transport vehicle, especially if the transport vehicle is in a space below a roof or canopy such as frequently occurs when a railroad train is standing at a station. This problem is particularly severe in the case of a system in which the required partial vacuum is generated and maintained intermittently, because of the large volume of foul air that is drawn rapidly from the sewage disposal system during a disposal and flushing cycle. This problem has previously been addressed by placing a filter in the path of the expelled air, but a filter for effectively combatting such malodours is relatively expensive and its effective useful life is relatively short.

One aim of this invention is to considerably lengthen the useful life of an odour filter or other malodourreducing means installed in a vacuum toilet system without substantially increasing the costs of installing and operating the system

What constitutes the invention in terms of a method is set out in the following claim 1 and in terms of a toilet system in the following claim 4.

The invention has at its heart the concept that a malodour-reducing device is only needed when the transport vehicle is at a standstill or is moving slowly at or close to a station or halting-place. By employing this concept, the useful life of the malodour-reducing device can be considerably increased by reducing the amount of time that it is actually in use. In a preferred arrangement according to the invention, a filter is used as an odour removal device but need be used only on at most 10% of the occasions when air is exhausted from the sewage collection device, which means that the filter may have a working life which is at least ten times longer than if the air exhausted from the sewage collection device passed through the filter on each occasion on which air was drawn from the sewage collection device. Consequently, the invention results in filter costs, as well as the labour costs for replacement of filters, being considerably reduced.

Instead of using a filter for odour removal other known arrangements are feasible, for instance, gas scrubbers and arrangements for adding odour-suppressing or odour-masking additives. Because such alternative malodour combatting arrangements are known in the art, the invention will hereafter be described only with reference to a filter as an malodour-reducing device, but other means providing substantially the same result can also be used within the scope of the invention. With the technology of today, however, the use of filters has been found to be the simplest solution.

When applying the invention, a convenient solution is to provide means that automatically remove the malodour-reducing means from the flow of exhaust air when the speed of the transport vehicle exceeds a preset limit value. For instance, in railroad trains it is conventional to establish several such limit values to influence different systems in the train. In modern high-speed trains, several systems in the train automatically receive a signal when the train speed is 5 km/h or above. This signal is automatically turned off when the speed again falls below the preset value. At a speed of 40 km/h a second signal can be generated, and this second signal locks the doors of the train so that they cannot be opened. It has proved convenient to use, in such trains, this second signal as a control signal for disabling or disconnecting the malodour-reducing means. By choosing a sufficiently high limit value, any foul smelling air pumped out of the sewage collection device by the vacuum generator which is not treated by the malodour-reducing means is dispersed so effectively in the atmospheric air by virtue of the speed of the vehicle that no problems with foul odours arise.

One simple way to disable the malodour-reducing means is to lead the air drawn out from the sewage collection device through a by-pass duct arranged in parallel with the malodour-reducing means. Such an arrangement includes in its simplest form a closure valve in the by-pass duct, which valve is opened when the by-pass duct is to be activated. If the flow resistance of an open by-pass duct is considerably lower than the flow resistance of a filter or the like, this simple system operates quite satisfactorily. Should, however, the malodour-reducing device have a low flow resistance, it might be desirable to use, instead of a simple closure valve in the by-pass duct, a three-way valve, which is used to switch the air flow to the malodour-reducing means or to the by-pass duct. A more secure control is then achieved which is independent of the relative flow resistances in the two possible air flow paths.

The invention has been found to be especially advantageous in vacuum toilet systems with intermittent vacuum generation. However, the invention may, with advantage, be applied also to so-called constant vacuum systems, that is, systems where the required transport vacuum is continuously maintained in the sewage collection device, see for instance, US-A-4,184,506 and US-A-4,034,421.

For a better understanding of the invention, and to show how the same may be carried into effect, reference will now be made, by way of example, to the accompanying drawings, in which:
Figure 1 is a diagrammatic illustration of a vacuum toilet system according to the invention, and
Figure 2 is an enlarged partial view of a modification of the vacuum system shown in Figure 1.

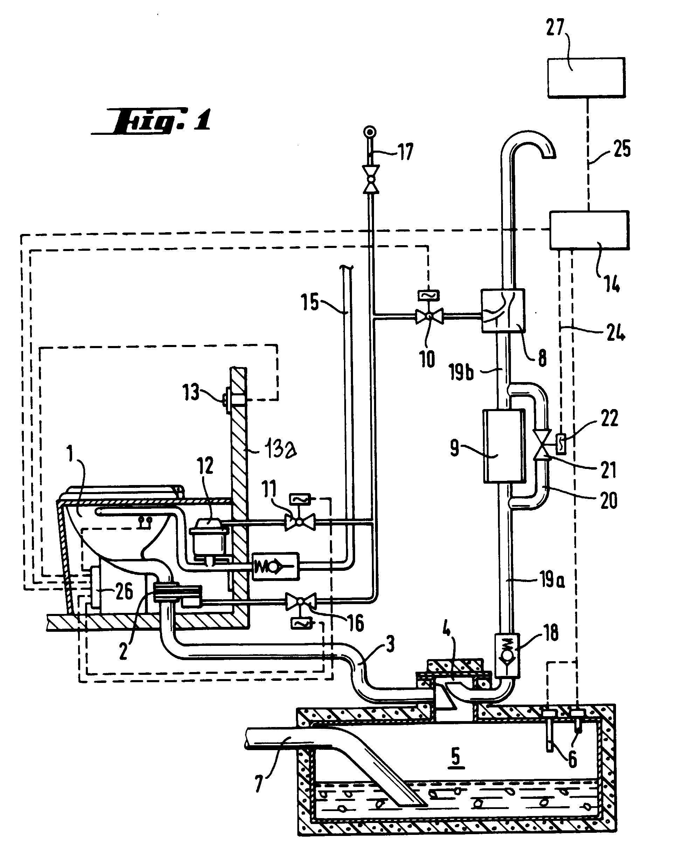

The vacuum toilet system shown in Figure 1 is designed for installation in a passenger transport vehicle such as a railroad car or the like.

The illustrated system comprises a toilet with a waste-receiving bowl 1, connected to a sewer pipe 3 via a normally-closed sewer valve 2. The sewer pipe 3 feeds, via an air separator 4, into a collecting tank 5, which is fitted with an alarm gauge 6 indicating, for example, when the collecting tank 5 has become filled to such an extent that it requires emptying. The collecting tank 5 can be emptied by connecting it to the atmosphere and simultaneously applying suction to a pipe 7, which is normally closed by means of a closure valve (not shown).

The vacuum generating means is an ejector 8, evacuating the sewer pipe 3 and the tank 5 through a filter 9 and an exhaust duct 19a, 19b. A check valve 18 is provided between the exhaust duct 19a, 19b and the tank 5 to prevent backflow of air into the tank and thereby preserve a level of vacuum in the tank 5 and the sewer pipe 3. The separator 4 separates the air from the discharged waste material. The separator 4 can be of a very simple design. Its object is to prevent liquid and solid matter from being sucked into the exhaust duct 19a, 19b.

The ejector 8 is operated by compressed air which is fed from a network 17 through a remotely controlled solenoid valve 10. Air from the compressed air network 17 is also led, via another remotely controlled solenoid valve 11 to a pressuriser 12, which pressurises rinse water received from a water pipe 15 and delivers it to the toilet bowl 1. A third remotely controlled solenoid valve 16 releases compressed air for operating the sewer valve 2. A flush knob 13 on a wall 13a of the toilet compartment is connected through an interface device 26 to a control unit 14 that controls the various functions of the system.

To execute a waste removal and flushing operation, the flush knob 13 is operated. The flush knob 13 sends an impulse to the control unit 14, which opens the solenoid valve 10, permitting compressed air to pass through the ejector 8, thus generating within a few seconds a sufficient partial vacuum in the collecting tank 5 and sewer pipe 3 for carrying out a waste removal and flushing operation. The solenoid valve 10 will remain open until the desired vacuum level has been reached. At a preset time in the operating cycle, the valve 11 opens and rinse water is released to the pressuriser 12, which provides the toilet bowl with rinse water under pressure. When the valve 16 opens, compressed air acts on the operating device of the sewer valve 2 so that the sewer valve opens. The waste material in the toilet bowl 1 is then forced into the sewer pipe 3 by the difference between the ambient pressure and the partial vacuum induced in the sewer pipe 3 and is transported by this pressure difference to the collecting tank 5.

Further toilet bowls with associated piping and other equipment may be connected to the collecting tank 5 and to the vacuum generating means. However, a system with intermittent vacuum generation is not suitable for a system including a large number of toilet bowls. The number of toilet bowls in such a system is preferably no more than two, and the maximum number is normally four. Through special arrangements, the number of toilet bowls can be increased to about ten in a system with intermittent vacuum production, but such a system is relatively complicated.

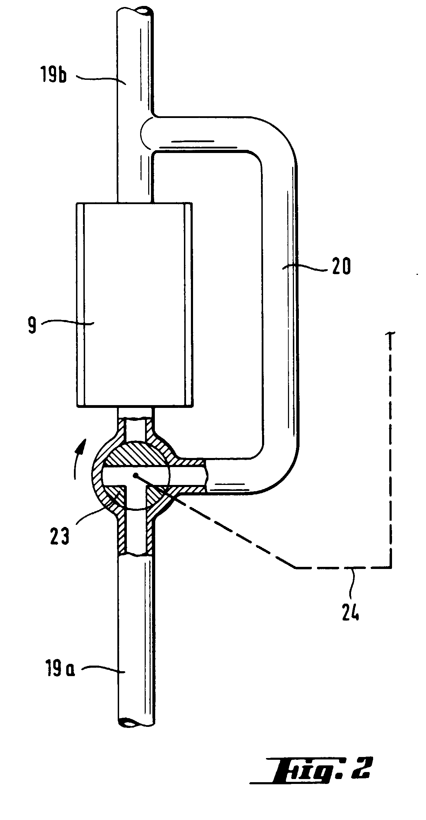

When a train or other vehicle, equipped with the illustrated vacuum toilet system, is at rest (e.g. standing at a station), air pumped out through the duct 19a, 19b passes through the filter 9, which removes odoriferous material from the air. The relatively expensive filter 9 is, however, not used when the train is moving at a relatively high speed. In those cases, the air pumped out through the duct 19a, 19b is led through a by-pass duct 20 past the filter 9. This function is achieved by opening a closure valve 21 present in the by-pass duct 20. Preferably, this valve has a remotely controlled operating device 22, which is controlled from the control unit 14 through a connection 24. The vehicle includes a speed sensing device 27 that generates control signals depending on the speed of the vehicle. One of these signals is fed to the control unit 14 through a connection 25. The speed sensing device might, for reasons not connected with the vacuum toilet system, provide a control signal when, for instance, a speed of 40 kn/h is reached, and this control signal may be used to control connection of the by-pass duct 20. Otherwise, a somewhat lower limit value, but preferably at least 20 km/h, might be more convenient. If the malodour-reducing means 9 has a very low flow resistance, the mere opening of the valve 21 may not be sufficient for providing the required by-pass function. In that case, as shown in figure 2, the valve 21 could be replaced by a remotely controlled, three-way valve 23, installed at one end of the by-pass duct 20, so that the three-way valve, dependent on its functional position, connects the by-pass duct 20 in the exhaust duct 19a, 19b and closes the flow path through the filter 9 or conversely connects the filter 9 in the exhaust duct 19a, 19b and closes the flow path through the by-pass duct 20. A three-way valve connected like this, positively determines the flow path of the exhausted air and therefore gives a more reliable control of the air flow, but will be somewhat more expensive, than the arrangement shown in Figure 1.

The invention is not limited to the embodiments shown, since several variations and modifications thereof are feasible within the scope of the following claims. For example, although the invention has been described with reference to a vacuum toilet system installed in a railroad car of a train it is also applicable to other passenger transport vehicles, such as buses. Also, although vacuum is generated intermittently in connection with the use of every toilet bowl emptying into the tank 5 shown in Figure 1, the invention is also applicable to a constant vacuum system, in which the level of partial vacuum in each pipe is monitored by a pressure sensing device and, during normal use of the system, is constantly kept between an upper and a lower limit within a range suitable for the intended sewage transport in the sewer pipe.

## Claims

1. A method of operating a vacuum toilet system on a transport vehicle which system includes malodour-reducing means (9) to considerably reduce the objectionable effect of malodorous air periodically exhausted from the system, characterised in that the reducing means (9) is used only at vehicle speeds below a preset limit value.

2. A method according to claim 1, characterised in that the transport vehicle includes means (27) for sensing the speed of the transport vehicle and generating a signal representative of the sensed speed, and in that said method comprises removing the malodour-reducing means (9) from the path of exhausted air when the speed represented by said signal exceeds said preset limit value.

3. A method according to claim 1 or claim 2, characterised in that air is exhausted from the system only when a vacuum generator (8) is operated in response to a flushing impulse by a user of the toilet system to create a partial vacuum in the system necessary for waste transportation, and in that operation of the vacuum generator (8) is thereafter discontinued until the next flushing impulse occurs.

4. A vacuum toilet system for a transport vehicle including at least one toilet bowl (1), a sewage collection device (3, 5), a normally-closed sewer valve (2) connected between each toilet bowl (1) and the sewage collection device (3, 5), a vacuum generator (8) for exhausting air from the sewage collection device (3, 5) to create a partial vacuum in the sewage collection device (3, 5) of a magnitude sufficient for effective transport of sewage from the toilet bowl (1) into the sewage collection device (3, 5) and a malodour-reducing means (9) for operating on the air exhausted from the sewage collection device (3, 5) by the vacuum generator (8), characterised by means (20, 21, 22) for rendering said malodour-reducing means (9) ineffective when the transport vehicle is moving at a speed that exceeds a preset limit value.

5. A vacuum toilet system according to claim 4, characterised in that the malodour-reducing means includes an odour removing filter (9).

6. A vacuum toilet system according to claim 4 or claim 5, characterised in that means (21) is provided for sensing the speed of the transport vehicle and automatically rendering the malodour-reducing means (9) ineffective when the speed of the transport vehicle exceeds said preset limit value.

7. A method or system according to any preceding claim, characterised in that said limit value is at least 20 km/h, preferably about 40 km/h.

8. A vacuum toilet system according to any of claims 4 to 7, characterised in that the means for rendering the malodour-reducing means (9) ineffective comprises a by-pass duct (20) connected in parallel with said malodour-combatting means (9).

9. A vacuum toilet system according to claim 8, characterised in that the flow resistance of the by-pass duct (20) is considerably lower than the flow resistance of the malodour-reducing means (9) and in that the system includes a shut-off valve (23) connected in the by-pass duct (20).

10. A vacuum toilet system according to claim 8, characterised in that an exhaust duct is provided for air drawn from the sewage collection device (3, 5), said exhaust duct having an upstream portion (19a) and a downstream portion (19b), in that the malodour-reducing means (9) is connected between the upstream portion (19a) of the exhaust duct and the downstream portion (19b) thereof, and in that the system further comprises a three-way valve (23) allowing one of said portions of the exhaust duct to be connected either to the by-pass duct (20) or the malodour-reducing means (9).

11. A vacuum toilet system according to any of claims 4 to 10, characterised in that control means responsive to a toilet flushing impulse is provided to cause the vacuum generator (8) to operate until the partial vacuum necessary for transportation of waste material from the toilet bowl (1) has been generated.

## Patentansprüche

1. Verfahren zum Betreiben eines Vakuumtoilettensystems auf einem Transportfahrzeug, wobei das System eine Geruchsverminderungsvorrichtung (9) zur beträchtlichen Verminderung der unangenehmen Auswirkung von übel riechender Luft, die periodisch aus dem System entlassen wird, umfaßt, dadurch gekennzeichnet, daß die Geruchsverminderungsvorrichtung (9) nur bei Fahrzeuggeschwindigkeiten verwendet wird, die unter einem vorgegebenen Grenzwert liegen.

2. Verfahren nach Anspruch 1, dadurch gekennzeichnet, daß das Transportfahrzeug eine Vorrichtung (27) zur Messung der Geschwindigkeit des Transportfahrzeugs und zur Erzeugung eines Signals, das die gemessene Geschwindigkeit darstellt, umfaßt, und dadurch, daß das Verfahren das Entfernen der Geruchsverminderungsvorrichtung (9) aus dem Weg der abgelassenen Luft umfaßt, wenn die Geschwindigkeit, die durch dieses Signal dargestellt wird, den vorgegebenen Grenzwert überschreitet.

3. Verfahren nach Anspruch 1 oder 2, dadurch gekennzeichnet, daß Luft nur aus dem System abgelassen wird, wenn ein Vakuumgenerator (8) in Erwiderung auf einen durch einen Benutzer des Toilettensystems ausgelösten Spülimpuls betrieben wird, um ein Teilvakuum im System zu erzeugen, das für den Abfall-transport erforderlich ist, und dadurch daß der Betrieb des Vakuumgenerators (8) danach unterbrochen wird, bis der nächste Spülimpuls auftritt.

4. Vakuumtoilettensystem für ein Transportfahrzeug, das mindestens eine Toilettenschüssel (1), eine Abwassersammelvorrichtung (3, 5), ein normalerweise geschlossenes Abwasserventil (2), das zwischen jeder Toilettenschüssel (1) und der Abwassersammelvorrichtung (3, 5) angeordnet ist, einen Vakuumgenerator (8) zur Abführung von Luft aus der Abwassersammelvorrichtung (3, 5) zur Erzeugung eines Teilvakuums in der Abwassersammelvorrichtung (3, 5) mit einer Höhe, die ausreichend ist für den wirksamen Transport von Abwasser aus der Toilettenschüssel (1) in die Abwassersammelvorrichtung (3, 5) und eine Geruchsverminderungsvorrichtung (9) zum Betrieb mit der Luft, die aus der Abwassersammelvorrichtung (3, 5) durch den Vakuumgenerator (8) abgeführt wird, umfaßt, gekennzeichnet durch eine Vorrichtung (20, 21, 22) zum Inaktivhalten der Geruchsverminderungsvorrichtung (9), wenn sich das Transportfahrzeug mit einer Geschwindigkeit bewegt, die einen vorgegebenen Grenzwert überschreitet.

5. Vakuumtoilettensystem nach Anspruch 4, dadurch gekennzeichnet, daß die Geruchsverminderungsvorrichtung ein Geruchsentfernungsfilter (9) enthält.

6. Vakuumtoilettensystem nach Anspruch 4 oder 5, dadurch gekennzeichnet, daß die Vorrichtung (21) vorgesehen ist, um die Geschwindigkeit des Transportfahrzeugs zu messen und automatisch die Geruchsverminderungsvorrichtung (9) inaktiv zu halten, wenn die Geschwindigkeit des Transportfahrzeugs den vorgegebenen Grenzwert überschreitet.

7. Verfahren oder System nach einem der vorhergehenden Ansprüche, dadurch gekennzeichnet, daß der Grenzwert mindestens 20 km/h und vorzugsweise ungefähr 40 km/h beträgt.

8. Vakuumtoilettensystem nach einem der Ansprüche 4 bis 7, dadurch gekennzeichnet, daß die Vorrichtung zum Halten der Geruchsverminderungsvorrichtung (9) im inaktiven Zustand eine Umgehungsleitung (20) umfaßt, die parallel zur Geruchsverminderungsvorrichtung (9) angebracht ist.

9. Vakuumtoilettensystem nach Anspruch 8, dadurch gekennzeichnet, daß der Flußwiderstand der Umgehungsleitung (20) beträchtlich niedriger ist als der Flußwiderstand der Geruchsverminderungsvorrichtung (9) und dadurch daß das System ein Schließventil (23) einschließt, das in der Umgehungsleitung (20) angebracht ist.

10. Vakuumtoilettensystem nach Anspruch 8, dadurch gekennzeichnet, daß eine Auslaßleitung für die Luft, die aus der Abwassersammelvorrichtung (3, 5) gezogen wird, vorgesehen ist, wobei diese Auslaßleitung einen stromaufwärtigen Teil (19a) und einen stromabwärten Teil (19b) aufweist, und dadurch daß die Geruchsverminderungsvorrichtung (9) zwischen dem stromaufwärtigen Teil (19a) der Auslaßleitung und deren stromabwärtigen Teil (19b) angeordnet ist, und dadurch daß das System ferner ein Dreiwegeventil (23) umfaßt, das es gestattet, daß einer dieser Teile der Auslaßleitung entweder mit der Umgehungsleitung (20) oder der Geruchsverminderungsvorrichtung (9) verbunden wird.

11. Vakuumtoilettensystem nach einem der Ansprüche 4 bis 10, dadurch gekennzeichnet, daß eine Steuervorrichtung vorgesehen ist, die in Erwiderung auf einen Toilettenspülimpuls veranlaßt, daß der Vakuumgenerator (8) arbeitet, bis das Teilvakuum, das für den Transport des Abfallmaterials aus der Toilettenschüssel (1) notwendig ist, erzeugt wurde.

## Revendications

1. Procédé de mise en oeuvre d'un système de toilette sous vide sur un véhicule de transport, lequel système comprend un moyen de réduction des mauvaises odeurs (9) destiné à réduire considérablement l'effet défavorable de l'air malodorant évacué périodiquement du système, caractérisé en ce que le moyen de réduction (9) est utilisé seulement à des vitesses du véhicule au-dessous d'une valeur limite préétablie.

2. Procédé selon la revendication 1, caractérisé en ce que le véhicule de transport comprend un moyen (27) pour détecter la vitesse du véhicule de transport et produire un signal représentatif de la vitesse détectée et en ce que ledit procédé comprend l'enlèvement du moyen de réduction de mauvaises odeurs (9) du trajet de l'air évacué lorsque la vitesse représentée par ledit signal dépasse ladite valeur limite préétablie.

3. Procédé selon la revendication 1 ou la revendication 2, caractérisé en ce que l'air est évacué du système seulement lorsqu'un générateur de vide (8) est mis en oeuvre en réponse à une impulsion de remplissage avec de l'eau de lavage par un utilisateur du système de toilette afin de créer un vide partiel dans le système nécessaire pour le transport des matières fécales et en ce que le fonctionnement du générateur de vide (8) est par la suite arrêté jusqu'à ce que l'impulsion de remplissage avec de l'eau de lavage suivante se produise.

4. Système de toilette sous vide pour un véhicule de transport comprenant au moins une cuvette de toilette (1), un dispositif de collecte de matières fécales (3, 5), un clapet d'évacuation normalement fermé (2) raccordé entre chaque cuvette de toilette (1) et le dispositif de collecte de matières fécales (3, 5), un générateur de vide (8) pour évacuer l'air du dispositif de collecte de matières fécales (3, 5) afin de créer un vide partiel dans le dispositif de collecte de matières fécales (3, 5) d'une amplitude suffisante pour transporter efficacement les matières fécales de la cuvette de toilette (1) dans le dispositif de collecte de matières fécales (3, 5) et un moyen de réduction de mauvaises odeurs (9) pour agir sur l'air évacué du dispositif de collecte de matières fécales (3, 5) par le générateur de vide (8), caractérisé par un moyen (20, 21, 22) pour rendre ledit moyen de réduction de mauvaises odeurs (9) inefficace lorsque le véhicule de transport se déplace à une vitesse qui dépasse une valeur limite préétablie.

5. Système de toilette sous vide selon la revendication 4, caractérisé en ce que le moyen de réduction de mauvaises odeurs comprend un filtre de suppression d'odeur (9).

6. Système de toilette sous vide selon la revendication 4 ou la revendication 5, caractérisé en ce qu'un moyen (21) est prévu pour détecter la vitesse du véhicule de transport et rendre automatiquement le moyen de réduction de mauvaises odeurs (9) inefficace lorsque la vitesse du véhicule de transport dépasse ladite valeur limite préétablie.

7. Procédé ou système selon l'une quelconque des revendications précédentes, caractérisé en ce que ladite valeur limite est au moins de 20 km/h et de préférence aux environs de 40 km/h.

8. Système de toilette sous vide selon l'une quelconque des revendications 4 à 7, caractérisé en ce que le moyen pour rendre le moyen de réduction de mauvaises odeurs (9) inefficace comprend un conduit de dérivation (20) raccordé en parallèle audit moyen de réduction de mauvaises odeurs (9).

9. Système de toilette sous vide selon la revendication 8, caractérisé en ce que la résistance à l'écoulement du conduit de dérivation (20) est considérablement inférieure à la résistance à l'écoulement du moyen de réduction de mauvaises odeurs (9) et en ce que le système comprend une soupape de fermeture (23) raccordée dans le conduit de dérivation (20).

10. Système de toilette sous vide selon la revendication 8, caractérisé en ce que le conduit d'évacuation est prévu pour extraire l'air du dispositif de collecte de matières fécales (3, 5), ledit conduit d'évacuation comportant une partie amont (19a) et une partie aval (19b), en ce que le moyen de réduction des mauvaises odeurs (9) est connecté entre la partie amont (19a) du conduit d'évacuation et la partie aval (19b) de celui-ci et en ce que le système comprend de plus une soupape à trois orifices (23) permettant à une desdites parties du conduit d'évacuation d'être raccordée soit au conduit d'évacuation (20), soit au moyen de réduction des mauvaises odeurs (9).

11. Système de toilette sous vide selon l'une quelconque des revendications 4 à 10, caractérisé en ce que le moyen de commande sensible à une impulsion de remplissage avec de l'eau de lavage des toilettes est prévu de façon à amener le générateur de vide (8) à agir jusqu'à ce que le vide partiel nécessaire pour le transport des matières fécales provenant de la cuvette de toilette (1) ait été produit.
